# EUROPÄISCHE PATENTSCHRIFT

(11) **EP 0 745 796 B1**
(45) Veröffentlichungstag und Bekanntmachung des Hinweises auf die Patenterteilung: **04.07.2001**
(21) Anmeldenummer: 96107898.7
(22) Anmeldetag: 17.05.1996
(51) Int. Cl.: F16K 27/02, F16K 7/14, F16K 7/12

(54) **Modularer Ventilaufbau**
Modular valve
Robinet modulaire

(30) Priorität: 19.05.1995 DE 29508401 U
(43) Veröffentlichungstag der Anmeldung: 04.12.1996
(73) Patentinhaber: Bürkert Werke GmbH & Co., D-74653 Ingelfingen (DE)
(72) Erfinder: Hettinger, Gerhard, D-74653 Ingelfingen (DE)
(74) Vertreter: Degwert, Hartmut, Dipl.-Phys.

(56) Entgegenhaltungen:
- EP-A- 0 578 168
- DE-A- 1 450 561

## Beschreibung

Die Erfindung betrifft einen modularen Ventilaufbau mit einem fluidischen Ventilteil und einem Antriebsteil, der aus einem Grundkörper mit Einlaß und Auslaß sowie einer Anschlußschnittstelle besteht, an der sowohl ein vom Einlaß ausgehender Einlaßkanal als auch ein zum Auslaß führender, vom Einlaß durch einen Steg getrennter Auslaßkanal endet, wobei die Auschluβschnittstelle des fluidischen Ventilteils eine vorbestimmte erste konfiguration hat.

In der DE-A-1 450 561 ist ein Ventilgehäuse für ein Membranventil gezeigt, das in einem Durchflußkanal einen querverlaufenden Steg aufweist, wobei eine über dem Steg befindliche Öffnung von einem Flansch umgeben ist.

Ein Ventilaufbau der eingangs genannten Art ist beispielsweise aus der EP-A-578 168 bekannt. Solche herkömmliche, aus einem Antriebsteil und einem Ventilkörper bestehende Ventile weisen unter anderem den Nachteil auf, daß für verschiedene Anwendungen spezifische Ventile erforderlich sind und entsprechend eine Vielzahl unterschiedlicher Komponenten bereitzustellen ist. Im Ergebnis führt dies zu einer kostenintensiven Produktion und Lagerhaltung. Zudem ist auch die Wartung solcher Ventile relativ aufwendig und kompliziert. Als problematisch erweist sich auch der nachträgliche Einbau von Sensoren, die beispielsweise zur Rückmeldung eines Istwerts einer Regelstrecke oder dergleichen verwendet werden. Für den Einbau muß in der Regel das gesamte Ventil ausgebaut werden, was insbesondere bei geschweißten Ventilanschlüssen kosten- und zeitaufwendig ist. Auch die Handhabung und Wartung der Sensorik ist relativ aufwendig. Ähnliche Probleme treten in Verbindung mit bereitzustellenden Dosier- oder Entnahmeeinrichtungen auf. Ungünstig ist auch, daß regelmäßig ein relativ hoher Kraftaufwand erforderlich ist, um das betreffende Ventil gegen die Kraft des strömenden Mediums zu schließen.

Ziel der Erfindung ist es, einen modularen Ventilaufbau der eingangs genannten Art zu schaffen, der aus wenigen elementaren Komponenten zusammengesetzt und dadurch problemlos an unterschiedliche Anforderungen angepaßt werden kann, wobei gleichzeitig auch eine möglichst einfache, problemlose Wartung sichergestellt sein soll.

Die Aufgabe wird nach der Erfindung dadurch gelöst, daß der Ventilaufbau desweiteren mehrere verschiedenartige Ventilkomponenten umfasst, die jeweils über eine Anschlußseite mit einer vorbestimmten zweiten Konfiguration verfügen, wobei die erste und die zweite Konfiguration zusammenpassen, so daß an das fluidische Ventilteil wahlweise und austauschbar eine der Ventilkomponenten anschließbar ist. Hierbei weisen die Anschlußseiten der verschiedenartigen Ventilkomponenten vorzugsweise jeweils wenigstens eine Anschlußöffnung mit gleicher, vorbestimmter Konfiguration auf.

Aufgrund dieser Ausbildung kann das betreffende Ventil ausgehend von einer minimierten Anzahl standardisierter Module zur Schaffung eines an die jeweilige Anwendung optimal angepaßten Systems auf einfache Weise zusammengesetzt werden. Die Wartung ist insbesondere dadurch vereinfacht, daß nunmehr Verschleißteile ausgetauscht werden können, ohne daß dazu der Grundkörper des fluidischen Ventilteils aus dem betreffenden Rohrsystem herausgetrennt werden muß, was insbesondere im Falle von Schweißverbindungen einen wesentlichen Vorteil darstellt. Zudem sind auch nachträgliche Änderungen einschließlich der Antriebsart problemlos möglich.

Gemäß einer bevorzugten Ausführungsform des erfindungsgemäßen Ventilaufbaus umfassen die verschiedenartigen Ventilkomponenten direkt betätigte Ventilelemente, die an der Berandung einer die Anschlußschnittstelle bildenden Öffnung sowie an dem Steg abdichten, fluidische Steuergehäusekörper, in denen eine Ventilkammer mit einem Dichtsitz gebildet ist, Zwischengehäuse zur Aufnahme von Sensoren und Zwischengehäuse zur Leitungsverzweigung, Probenentnahme, Einspeisung oder Dosierung.

Damit ergibt sich mit wenigen standardisierten Modulen eine Vielzahl von Variationsmöglichkeiten für den Ventilaufbau. Durch die Verwendung eines einen Dichtsitz aufweisenden standardisierten fluidischen Steuergehäusekörpers im betreffenden Ventilaufbau kann der zur Ventilbetätigung erforderliche Kraftaufwand auf einfache Weise verringert werden.

Die Zwischengehäuse können ihrerseits auf der ihrer Anschlußseite gegenüberliegenden Seite eine Anschlußschnittstelle mit einer vorbestimmten Konfiguration aufweisen. Damit kann ein solches Zwischengehäuse ohne weiteres beispielsweise zwischen den Grundkörper und einen mit einem Dichtsitz versehenen fluidischen Steuergehäusekörper eingesetzt werden. Aufgrund der einheitlich konfigurierten Anschlußseite kann derselbe fluidische Steuergehäusekörper bedarfsweise jedoch auch unmittelbar auf den Grundkörper aufgesetzt werden.

Gemäß einer weiteren zweckmäßigen Ausführungsvariante weist der fluidische Steuergehäusekörper seinerseits auf der seiner Anschlußseite gegenüberliegenden Seite eine Anschlußschnittstelle mit einer vorbestimmten Konfiguration zur wahlfreien Kombination mit einem Antriebsteil oder einem Vorsteuerventilteil auf. Dadurch werden die Variationsmöglichkeiten hinsichtlich der Zusammensetzung des jeweiligen Ventils weiter erhöht, während die Anzahl standardisierter Module weiterhin gering gehalten wird.

Der Grundkörper ist vorzugsweise aus einem Rohrabschnitt durch Einbringen in eine Preßform und Verformen mittels eines Stempels gebildet, wobei die Enden des Rohrabschnitts als rohrförmige Anschlußstutzen erhalten sind und der zwischen den Enden gelegene Mittelabschnitt auf einer Seite des Rohrabschnitts, die dem Boden des Ventilkörpers entspricht, einwärts gedrückt ist, während auf der gegenüberliegenden Seite des Rohrabschnitts mittels einer Gegenfläche der Preßform eine Abflachung der Wandung des Rohrabschnitts ausgebildet ist, so daß gegenüber der Abflachung zwei Fluid-Leitflächen gebildet sind, die ausgehend von der durch die Anschlußstutzen definierten Axialrichtung axial einwärts und zugleich in Richtung zu der Abflachung hin orientiert sind sowie in einem gemeinsamen, der Abflachung gegenüberliegenden Steg zusammenlaufen, und wobei in dem der Abflachung entsprechenden Teil der verformten Wandung des Rohrabschnitts gegenüber dem Steg die Anschlußschnittstelle gebildet ist.

In den Unteransprüchen sind weitere vorteilhafte Ausführungsvarianten der Erfindung angegeben.

Die Erfindung wird im folgenden anhand von Ausführungsbeispielen unter Bezugnahme auf die Zeichnung näher erläutert; in dieser zeigen:
- Fig. 1 eine schematische Längsschnittdarstellung eines Grundkörpers des fluidischen Ventilteils eines modularen Ventilaufbaus,
- Fig. 2 eine Draufsicht des in Fig. 1 gezeigten Grundkörpers,
- Fig. 3 eine perspektivische Längsschnittdarstellung eines mit einem Anschlußflansch versehenen Grundkörpers,
- Fig. 4 eine schematische Darstellung miteinander kombinierbarer Module eines den Grundkörper der Fig. 1 bis 3 umfassenden modularen Ventilaufbaus,
- Fig. 5 eine schematische, teilweise geschnittene Darstellung eines den Grundkörper der Fig. 1 bis 3 enthaltenden hilfsgesteuerten, gekoppelten modularen Sitzventils,
- Fig. 6 eine schematische, teilweise geschnittene Seitenansicht eines den Grundkörper der Fig. 1 bis 3 enthaltenden hilfsgesteuerten, entkoppelten modularen Sitzventils,
- Fig. 7 einen axialen Schnitt durch ein unter Verwendung des Grundkörpers der Fig. 1 bis 3 hergestelltes Durchgangs-Membranventil,
- Fig. 8 eine schematische Längsschnittdarstellung einer anderen Ausführungsform des Grundkörpers,
- Fig. 9 eine schematische Schnittdarstellung eines Grundkörpers der in Fig. 8 gezeigten Art mit einer gegenüber Fig. 8 abgewandelten Fluid-Leitflächen, an den ein fluidischer Steuergehäusekörper mit Dichtsitz angesetzt ist,
- Fig. 10 eine Fig. 9 vergleichbare Darstellung, wobei jedoch zwischen den Grundkörper und den fluidischen Steuergehäusekörper ein Zwischengehäuse eingefügt und an den fluidischen Steuergehäusekörper zur Bildung eines Sitzventils ein Antriebsteil angesetzt ist,
- Fig. 11 eine Fig. 10 vergleichbare Darstellung eines Sitzventils, wobei jedoch das Zwischengehäuse weggelassen ist,
- Fig. 12 einen Schnitt entlang der Linie X-X in Fig. 11, und
- Fig. 13 eine Draufsicht auf den Boden des Grundkörpers.

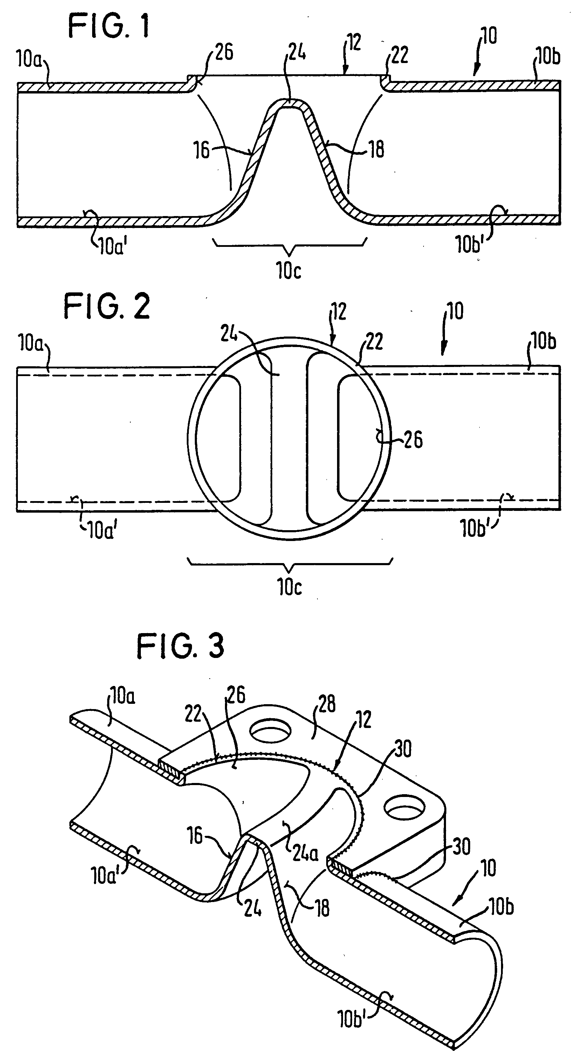

Die Figuren 1 bis 3 zeigen eine erste Ausführungsform eines Grundkörpers 10, durch den der fluidische Ventilteil eines modularen Ventilaufbaus gebildet wird.

Dieser einen Einlaß 10a und einen Auslaß 10b aufweisende Grundkörper 10 besitzt eine einheitliche Anschlußschnittstelle 12, an der ein vom Einlaß 10a ausgehender Einlaßkanal 10a' und ein zum Auslaß 10b führender, vom Einlaß 10a durch einen Steg 24 getrennter Auslaßkanal 10b' endet. An diese einheitliche Anschlußschnittstelle 12 ist in einer weiter unten noch näher zu beschreibenden Weise wahlweise eine von mehreren verschiedenartigen, jedoch ebenfalls über eine entsprechende, einheitlich gestaltete Anschlußseite verfügenden Ventilkomponenten anschließbar.

Der Grundkörper 10 ist aus einem Rohrabschnitt durch Einbringen in eine Preßform und Verformen mittels eines Stempels gebildet. Dabei sind die Enden des Rohrabschnitts als den Einlaß 10a und den Auslaß 10b bildende rohrförmige Anschlußstutzen erhalten. Der zwischen den Enden gelegene Mittelabschnitt 10c ist auf einer Seite des Rohrabschnitts, die dem Boden des Ventilkörpers entspricht, einwärts gedrückt, während auf der gegenüberliegenden Seite des Rohrabschnitts mittels einer Gegenfläche der Preßform zunächst eine Abflachung der Wandung des Rohrabschnitts ausgebildet ist, so daß gegenüber der Abflachung zwei Fluid-Leitflächen 16, 18 gebildet sind, die ausgehend von der durch die Anschlußstutzen definierten Axialrichtung axial einwärts und zugleich in Richtung zu der Abflachung hin orientiert sind sowie in dem gemeinsamen, der Abflachung gegenüberliegenden Steg 24 zusammenlaufen. Die einheitliche Anschlußschnittstelle 12 ist gegenüber dem Steg 24 in dem der Abflachung entsprechenden Teil der verformten Wandung des Rohrabschnitts gebildet. Hierzu ist bei der in den Figuren 1 und 2 gezeigten Ausführungsform im Abflachungsbereich ein kreisscheibenförmiger Wandungsabschnitt abgetrennt, so daß von der Abflachung praktisch nur ein Ringbund 22 verbleibt, der die Berandung einer die Anschlußschnittstelle 12 bildenden Öffnung 26 darstellt, die in Draufsicht (vergleiche Fig. 2) kreisrund ist. Diese Öffnung 26 gibt den Blick auf den Steg 24 frei, der - wie in Fig. 2 gezeigt - quer zur Achse des Rohrabschnitts verläuft und an beiden Enden stetig in die Berandung der Öffnung 26 übergeht. Wie die Perspektivansicht der Fig. 3 erkennen läßt, ist der Steg 24 konkav gekrümmt, wobei er jedoch eine flache Dichtfläche 24a aufweist.

Zur Fertigstellung des vorzugsweise metallischen Grundkörpers 10 wird ein rechteckiger, plattenartiger Anschlußflansch 28, der eine dem Außendurchmesser des Ringbundes 22 entsprechende Öffnung aufweist, um den Ringbund 22 herum aufgesetzt und zweckmäßigerweise durch Schweißnähte 30 befestigt.

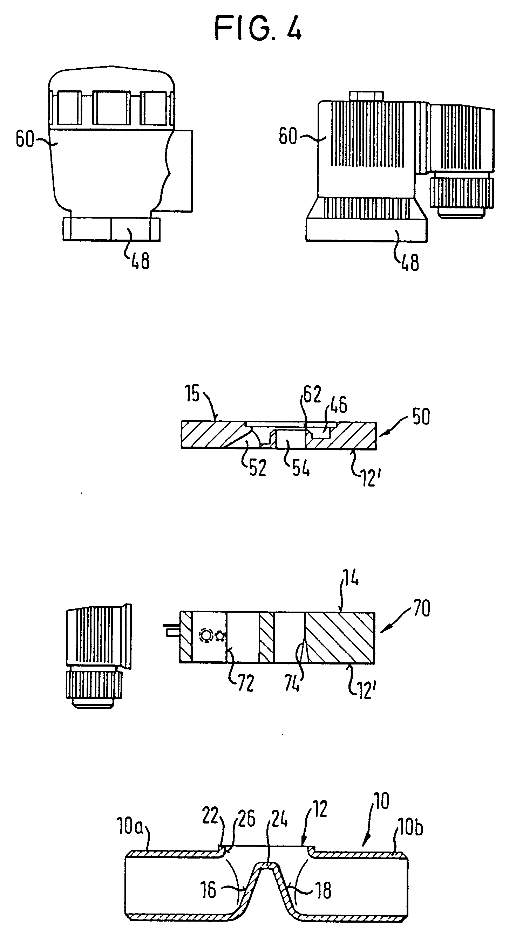

In Fig. 4 sind verschiedene Komponenten für einen modularen Ventilaufbau gezeigt, die den Grundkörper 10 der Figuren 1 bis 3, verschiedene, wahlweise verwendbare Antriebsteile 60 sowie die zuvor genannten verschiedenartigen, bedarfsweise verwendbaren und kombinierbaren Ventilkomponenten umfassen, die über eine einheitlich gestaltete Anschlußseite 12' an die einheitliche Anschlußschnittstelle 12 des Grundkörpers 10 anschließbar sind.

In Fig. 4 sind bezüglich dieser verschiedenartigen Ventilkomponenten lediglich ein fluidischer, mit einem Dichtsitz 62 versehener Steuergehäusekörper 50 und ein Zwischengehäuse 70 zur Aufnahme von Sensoren dargestellt. Grundsätzlich können weitere, beliebig ausgelegte, jedoch eine einheitlich gestaltete Anschlußseite aufweisende Ventilkomponenten vorgesehen sein. Ein betreffendes Zwischengehäuse 70 kann insbesondere zur Leitungsverzweigung, Probenentnahme, Einspeisung, Dosierung oder dergleichen ausgelegt sein und bedarfsweise zu diesem Zweck eingefügt werden.

Wahlweise ist entweder der fluidische Steuergehäusekörper 50 oder das Zwischengehäuse 70 an die einheitliche Anschlußschnittstelle 12 des Grundkörpers 10 anschließbar. Hierzu sind die beiden verschiedenartigen Ventilkomponenten 50, 70 mit einer einheitlich gestalteten Anschlußseite 12' versehen, die an die einheitliche Anschlußschnittstelle 12 des Grundkörpers 10 angepaßt ist. Im vorliegenden Fall weisen die Anschlußseiten 12' der verschiedenartigen Ventilkomponenten 50, 70 zwei einheitlich gestaltete Anschlußöffnungen 52, 54 bzw. 72, 74 auf. Im Fall des plattenartigen fluidischen Steuergehäusekörpers 50 sind die beiden Anschlußöffnungen 52, 54 durch zwei Kanäle gebildet, wobei der die Anschlußöffnung 52 definierende Kanal in einen Ringraum 46 mündet, der zwischen dem fluidischen Steuergehäusekörper 50 und dem Gehäuse 48 des betreffenden, an das Steuergehäusekörper 50 angesetzten Antriebsteils 60 gebildet wird. Der Ringraum 46 umgibt den im fluidischen Steuergehäusekörper 50 vorgesehenen Dichtsitz 62, in den der andere, die Anschlußöffnung 54 bildende Kanal mündet.

Im Fall des Zwischengehäuses 70 werden die beiden Anschlußöffnungen 72, 74 durch zwei durchgehende Kanäle gebildet, in welche beispielsweise Sensoren eingesetzt oder Anschlußfunktionen integriert werden können.

Die Zwischengehäuse 70 weisen ihrerseits auf der ihrer Anschlußseite 12' gegenüberliegenden Seite eine einheitliche Anschlußschnittstelle 14 auf.

Der fluidische Steuergehäusekörper 50 ist seinerseits auf der seiner Anschlußseite 12' gegenüberliegenden Seite mit einer einheitlichen Anschlußschnittstelle 15 zur wahlfreien Kombination mit einem Antriebsteil 60 oder einem Vorsteuerventilteil versehen.

Bei den in Fig. 4 gezeigten Komponenten für den modularen Aufbau eines Sitzventils kann somit entweder das Zwischengehäuse 70 zwischen den Grundkörper 10 und den fluidischen Steuergehäusekörper 50 eingefügt oder der fluidische Steuergehäusekörper 50 direkt am Grundkörper 10 angesetzt werden. An die vom Grundkörper 10 abgewandte einheitliche Anschlußschnittstelle 15 des fluidischen Steuergehäusekörpers 50 kann entweder direkt ein betreffender Antriebsteil 60 oder bedarfsweise auch ein Vorsteuerventilteil angesetzt werden. Nachdem das Ventil zusammengesetzt ist, sind die entsprechend einheitlich gestalteten Anschlußöffnungen 52, 54; 72, 74 der jeweils verwendeten, verschiedenartigen Ventilkomponenten 50, 70 mit den betreffenden, an der einheitlichen Anschlußschnittstelle 12 mündenden Anschlußkanälen des Grundkörpers 10 ausgerichtet, wobei diese Anschlußkanäle durch eine Abdichtung im Stegbereich gleichzeitig voneinander getrennt werden.

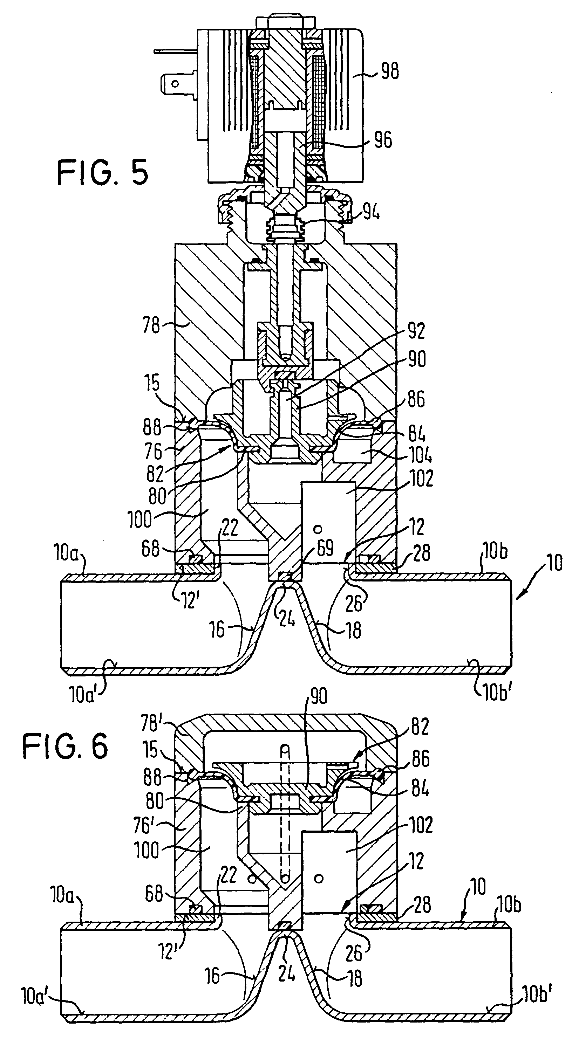

Fig. 5 zeigt den modularen Aufbau eines hilfsgesteuerten gekoppelten Sitzventils, bei dem wiederum der in den Figuren 1 bis 3 gezeigte Grundkörper 10 verwendet wird.

Ein fluidischer Steuergehäusekörper 76 ist gegen den den Fluid-Leitflächen 16, 18 gegenüberliegenden Anschlußflansch 28 des Grundkörpers 10 angesetzt. Der fluidische Steuergehäusekörper 76 ist mit zwei Anschlußkanälen 100, 102 versehen, die auf der einheitlichen Anschlußseite 12' wiederum zwei Anschlußöffnungen bilden, die mit den durch den Steg 24 voneinander getrennten, in der einheitlichen Anschlußschnittstelle 12 endenden Anschlußkanälen 10a', 10b' des Grundkörpers 10 fluchten. Durch einen Dichtring 68 erfolgt eine Abdichtung im Bereich des Ringbundes 22, der die Berandung der Öffnung 26 der einheitlichen Anschlußschnittstelle 12 des Grundkörpers 10 bildet. Durch eine weitere Dichtung 69 ist für eine Abdichtung im Bereich des Steges 24 gesorgt.

Mit dem zentralen, zylindrischen Dichtsitz 80 des fluidischen Steuergehäusekörpers 76 wirkt ein Membransystem 82 zusammen, das zwischen dem fluidischen Steuergehäusekörper 76 und einem gegen dessen vom Grundkörper 10 abgewandte einheitliche Anschlußschnittstelle 15 angesetzten Vorsteuerventilteil 78 angeordnet ist. Das Membransystem 82 besitzt einen zentralen Teil 90, an dessen Umfang eine Membran 84 eingespannt ist, die am Außenumfang mit einer Randwulst 86 versehen ist, die in einer zwischen dem Steuergehäusekörper 76 und dem Vorsteuerventilteil 78 gebildeten Ringnut 88 aufgenommen ist. Der zentrale Teil 90 ist mit einer als Vorsteuerkanal dienenden Axialbohrung 92 versehen. Der Anschlußkanal 100 des Steuergehäusekörpers 76 mündet in einen Ringraum 104, der zwischen der Membran 84 und dem fluidischen Steuergehäusekörper 76 gebildet ist. Dieser Ringraum 104 umgibt den zylindrischen Dichtsitz 80, in den der andere Anschlußkanal 100 mündet.

Der zentrale Teil 90 des Membransystems 82 ist über einen Faltenbalg 94 im Vorsteuerventilteil 78 mit dem Kern 96 eines an den Vorsteuerventilteil 78 angesetzten magnetischen Antriebsteils 98 gekoppelt. Demnach ergibt sich mit dem dargestellten modularen Ventilaufbau ein vorgesteuertes Ventil mit magnetischer Zwangsanhebung des mit dem Dichtsitz 80 zusammenwirkenden Membransystems 82.

Bei diesem in Fig. 5 dargestellten modularen Ventilaufbau ist somit der fluidische Steuergehäusekörper 76 über die einheitlich gestaltete Anschlußseite 12' an die einheitliche Anschlußschnittstelle 12 des Grundkörpers 10 angeschlossen, während der fluidische Steuergehäusekörper 76 auf der seiner Anschlußseite 12' gegenüberliegenden Seite wiederum eine einheitliche Anschlußschnittstelle 15 aufweist, gegen die im vorliegenden Fall der Steuerventilteil 78 angesetzt ist.

In Fig. 6 ist ein modularer Ventilaufbau zur Bildung eines hilfsgesteuerten entkoppelten Sitzventils dargestellt.

An den Grundkörper 10 ist wiederum ein fluidischer Steuergehäusekörper 76' mit einem zentralen, zylindrischen Dichtsitz 80 und zwei Anschlußkanälen 100, 102 angesetzt. Der Anschluß des die einheitlich gestaltete Anschlußseite 12' aufweisenden fluidischen Steuergehäusekörpers 76' an die einheitliche Anschlußschnittstelle 12 des Grundkörpers 10 sowie die Abdichtung im Bereich des Ringbundes 22 und des Steges 24 erfolgen in derselben Weise wie bei der Ausführung gemäß Fig. 5.

Gegen die vom Grundkörper 10 abgewandte eingeitliche Anschlußschnittstelle 15 des fluidischen Steuergehäusekörpers 76' ist nun aber ein anderer Vorsteuerventilteil 78' angesetzt, über den eine vom Magnetanker entkoppelte Vorsteuerung erfolgt.

Das Membransystem 82 ist in der gleichen Weise wie bei der Ausführung der Fig. 5 zwischen dem fluidischen Steuergehäusekörper 76' und dem gegen dessen einheitliche Anschlußschnittstelle 15 angesetzten Vorsteuerventilteil 78' angeordnet. Anders als bei der zuvor genannten Ausführung ist dieses Membransystem 82 jedoch nicht mehr direkt mit dem Magnetanker gekoppelt.

Bei dieser in Fig. 6 gezeigten Ausführung eines hilfsgesteuerten entkoppelten Sitzventils kann somit der gleiche Grundkörper 10 wie bei der in Fig. 5 dargestellten Ausführung verwendet werden, an dessen einheitliche Anschlußschnittstelle 12 unmittelbar der fluidische Steuergehäusekörper 76' angeschlossen ist, der dazu wiederum eine entsprechende, einheitlich gestaltete Anschlußseite 12' besitzt, die im vorliegenden Fall zwei durch die Anschlußkanäle 100, 102 gebildete Anschlußöffnungen enthält, die einheitlich mit denen der anderen, im übrigen verschiedenartig ausgelegten Ventilkomponenten gestaltet sind. Der fluidische Steuergehäusekörper 76' weist seinerseits auf der seiner Anschlußseite 12' gegenüberliegenden Seite wieder eine einheitliche Anschlußschnittstelle 15 auf, um diesen fluidischen Steuergehäusekörper 76' wahlweise mit einem Vorsteuerventilteil oder einem Antriebsteil, im vorliegenden Fall mit dem Vorsteuerventilteil 78' kombinieren zu können.

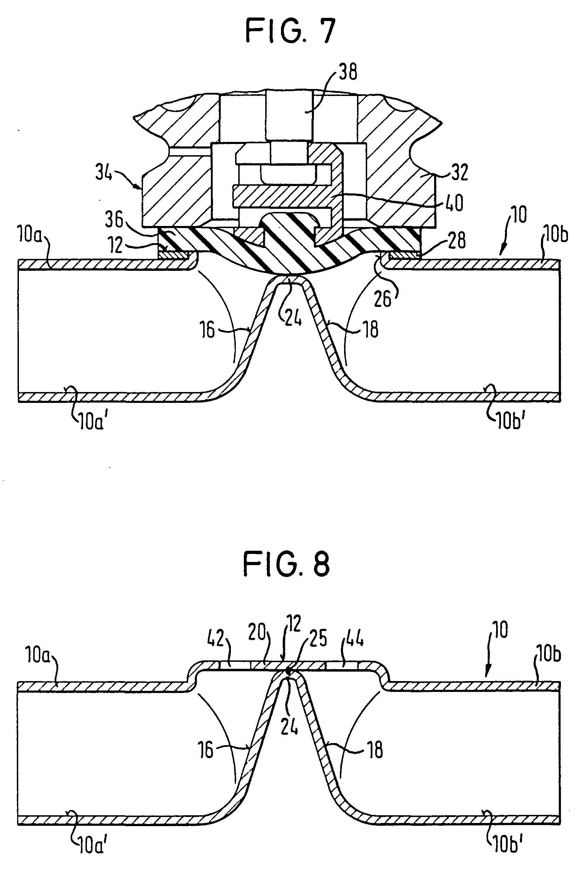

Darüber hinaus eignet sich der in den Figuren 1 bis 3 gezeigte Grundkörper 10 insbesondere auch zur Verwirklichung eines Durchgangs-Membranventils der in Fig. 7 gezeigten Art.

Hierbei ist zwischen dem Anschlußflansch 28 und dem Gehäuse 32 eines nur teilweise dargestellten herkömmlichen Antriebsteils 34 eine Membran 36 eingespannt, an der ein Betätigungsstößel 38 des Antriebsteils 34 über einen Kopplungsteil 40 angreift. Bei dem in der Fig. 7 gezeigten Schließzustand wird die Membran 36 in Dichtanlage an dem Steg 24 gehalten. In diesem Zustand ist der Antriebsteil 34 durch Federkraft angedrückt aktiviert. Wird der Antriebsteil 34 pneumatisch aktiviert, hebt sich die Membran 36 von dem Steg 14 ab. Das Ventil befindet sich dann in seiner Öffnungsstellung.

Ein Durchgangs-Membranventil dieser Bauart eignet sich auch für verschmutzte Medien, es benötigt jedoch eine hohe Antriebsleistung. Diese ist bei Sitzventilen, wie sie durch den erfindungsgemäßen Ventilaufbau problemlos verwirklicht werden können, wesentlich geringer, wobei sie durch den Einsatz von Vorsteuerventilen weiter vermindert werden kann. Aufgrund des erfindungsgemäßen modularen Ventilaufbaus ist auch der wahlweise Einsatz solcher Vorsteuerventile problemlos möglich.

Fig. 8 zeigt eine weitere Ausführungsform des Grundkörpers 10, der insbesondere wiederum zur Verwirklichung von Sitzventilen geeignet ist. Entsprechende Teile sind mit den gleichen Bezugszeichen wie bei der vorherigen Ausführungsform versehen. Anders als bei der in den Figuren 1 bis 3 dargestellten Ausführungsform ist bei dem in Fig. 8 gezeigten Grundkörper 10 der Steg 24 bis an die Innenseite der Abflachung 20 herangedrückt und dort zur Abdichtung bei 25 verlötet oder verschweißt. In der Abflachung 20 sind im Abstand voneinander zwei Durchbrüche 42, 44 angebracht, durch die die einheitliche Anschlußschnittstelle 12 dieses Grundkörpers 10 gebildet wird.

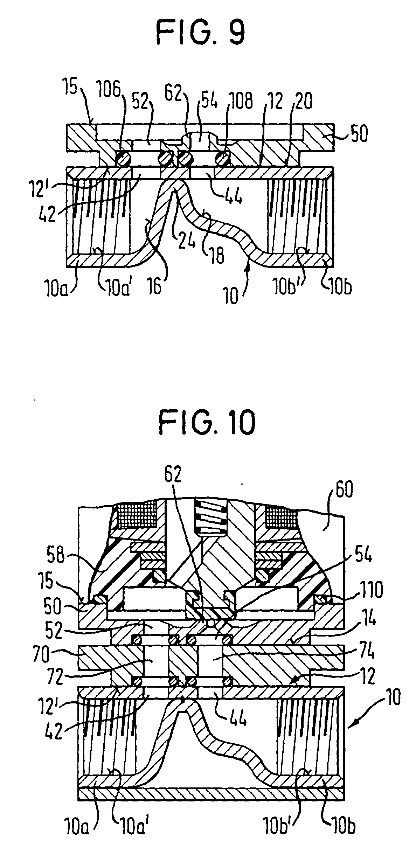

Die Figuren 9 bis 13 zeigen Varianten des erfindungsgemäßen modularen Ventilaufbaus zur Verwirklichung eines Sitzventils, wobei der verwendete Grundkörper 10 gegenüber der in Fig. 8 dargestellten Ausführung leicht abgewandelt ist.

Der Grundkörper 10 der zuletzt genannten, durch den erfindungsgemäßen modularen Ventilaufbau verwirklichten Ventilvarianten besitzt ebenso wie die Ausführung der Fig. 8 einen bis zur Anlage an der gegenüberliegenden Abflachung 20 eingedrückten Wandungsteil, der an dieser Abflachung 20 zur Abdichtung verlötet oder verschweißt ist. In der Abflachung 20 sind zur Bildung der einheitlichen Anschlußschnittstelle 12 auch wiederum zwei getrennte Durchbrüche 42, 44 angeordnet, die auch oval ausgebildet sein können. Die Fluid-Leitfläche 16 verläuft jedoch etwas steiler als bei der zuvor beschriebenen Ausführung. Zudem ist auch die Fluid-Leitfläche 18 leicht abgewandelt, die nunmehr ausgehend von dem Anschlußstutzen 10b zunächst einen steilen Anstieg, dann einen Wendepunkt und einen flachen Abschnitt sowie anschließend wieder einen steilen Anstieg aufweist.

Bei der in Fig. 9 dargestellten Variante eines modularen Ventilaufbaus ist ein rechteckiger, plattenartiger fluidischer Steuergehäusekörper 50 gegen die den Fluid-Leitflächen 16, 18 gegenüberliegende, einen Anschlußflansch bildende Abflachung 20 des Grundkörpers 10 angesetzt. Dieser ist mit zwei Kanälen 52, 54 versehen, die mit den die einheitliche Anschlußschnittstelle 12 des Grundkörpers 10 bildenden Durchbrüchen 42, 44 fluchten. Während die Durchbrüche 42, 44 des Grundkörpers 10 die einheitliche Anschlußschnittstelle 12 definieren, legen die Kanäle 52, 54 des wiederum einen Dichtsitz 62 aufweisenden fluidischen Steuergehäusekörpers 50 dessen auf der einheitlich gestalteten Anschlußseite 12' vorgesehene Anschlußöffnungen fest, die einheitlich mit denen anderer Ventilkomponenten gestaltet sind, die im übrigen verschiedenartig ausgeführt sein können. Die Kanäle 52, 54 sind jeweils von einem Dichtring 106, 108 umgeben.

Während der fluidische Steuergehäusekörper 50 über seine einheitliche Anschlußseite 12' gegen die entsprechende Anschlußschnittstelle 12 des Grundkörpers 10 angesetzt ist, weist er auf der gegenüberliegenden Seite wiederum die einheitliche Anschlußschnittstelle 15 auf, über die er bedarfsweise insbesondere mit einem pneumatischen oder elektrischen Antriebsteil oder einem Vorsteuerventilteil kombinierbar ist.

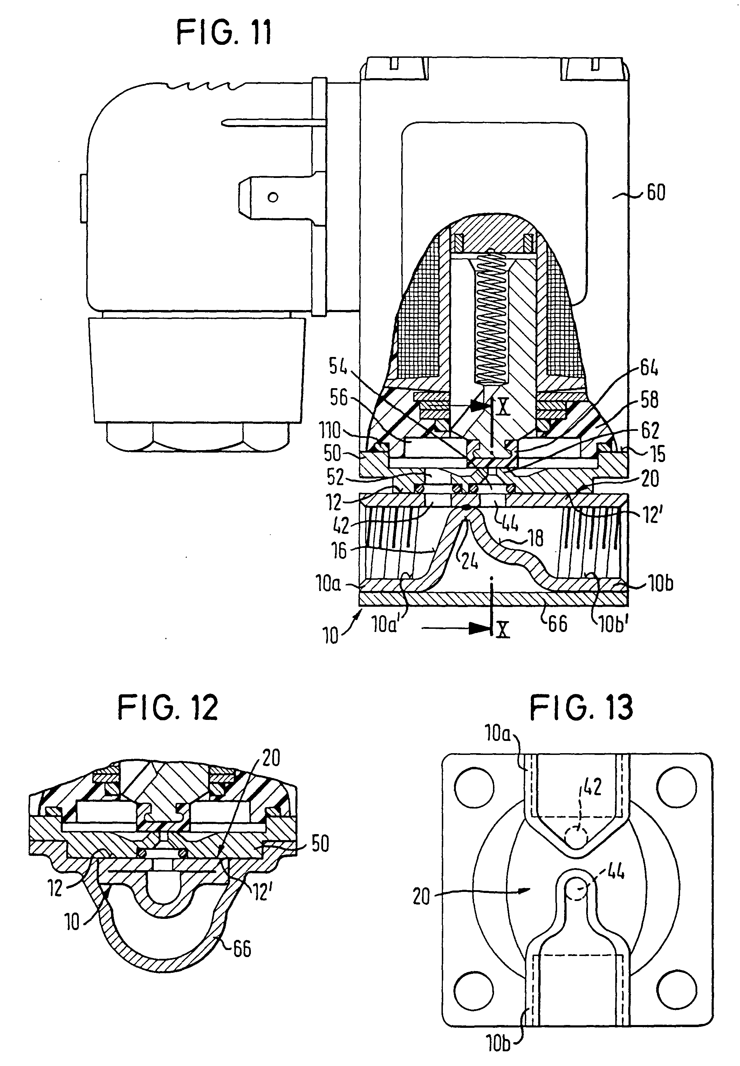

Gemäß Fig. 11 (vergleiche auch Fig. 10) ist gegen diese einheitliche Anschlußschnittstelle 15 des fluidischen Steuergehäusekörpers 50 der Anschlußflansch 58 eines magnetischen Antriebsteils 60 angesetzt, wobei die Abdichtung über einen dazwischen liegenden Dichtring 110 erfolgt. Der Steuergehäusekörper 50 ist hier gegenüber der in Fig. 9 gezeigten Ausführung leicht abgewandelt. So ist insbesondere der Kanal 54 verjüngt ausgebildet.

Bei dem in Fig. 11 gezeigten, mit Hilfe des erfindungsgemäßen modularen Ventilaufbaus verwirklichten Sitzventils mündet der Kanal 52 des den Dichtsitz 62 aufweisenden fluidischen Steuergehäusekörpers 50 in einen Ringraum 56, der zwischen dem plattenartigen fluidischen Steuergehäusekörper 50 und dem Anschlußflansch 58 des an die Anschlußschnittstelle 15 des Steuergehäusekörpers 50 angesetzten Antriebsteils 60 gebildet ist. Der Ringraum 56 umgibt den Dichtsitz 62, in den der sich verjüngende Kanal 54 mündet. Ein durch den magnetischen Antriebsteil 60 betätigter Schließkörper 64 wirkt mit dem Dichtsitz 62 zusammen.

Der gesamte Grundkörper 10 ist von einer Ummantelung oder Halterung 66 umgeben, die auch den fluidischen Steuergehäusekörper 50 abdeckt. Dieser Teil kann somit insbesondere auch zur Befestigung des fluidischen Steuergehäusekörpers 50 an dem Grundkörper 10 dienen, wie sich dies insbesondere aus Fig. 12 ergibt, die einen Schnitt entlang der Linie X-X in Fig. 10 darstellt. Fig. 13 zeigt die Ventilanordnung der Fig. 11 von unten.

Bei der in Fig. 10 gezeigten Ausführungsvariante ist zwischen dem plattenartigen fluidischen Steuergehäusekörper 50 und dem Grundkörper 10, die gleich wie bei der zuvor beschriebenen Ausführungsform ausgebildet sind, ein plattenartiges Zwischengehäuse 70 eingefügt. Dieses Zwischengehäuse 70 ist mit zwei durchgehenden Kanälen 72, 74 versehen, die mit den Durchbrüchen 42, 44 des Grundkörpers 10 fluchten und an die Kanäle 52, 54 des den Dichtsitz 62 aufweisenden fluidischen Steuergehäusekörpers 50 anschließen.

Wie bereits im Zusammenhang mit Fig. 4 erläutert, eröffnet ein solches Zwischengehäuse 70 die Möglichkeit einer Aufnahme von Sensoren, Leitungsverzweigungen, Probenentnahme, Einspeisung, Dosierung und dergleichen. Bei den Sensoren kann es sich beispielsweise um Druck-, Durchfluß- und/oder Temperatursensoren handeln.

Das Zwischengehäuse 70 weist wiederum eine Anschlußseite 12' auf, die einheitlich mit der anderer Ventilkomponenten gestaltet ist und über die das Zwischengehäuse 70 an die einheitliche Anschlußschnittstelle 12 des Grundkörpers 10 anschließbar ist. Diese Anschlußseite 12' des Zwischengehäuses 70 ist somit insbesondere einheitlich mit der des den Dichtsitz 62 aufweisenden fluidischen Steuergehäusekörpers 50 ausgebildet. Damit kann im Bedarfsfall das Zwischengehäuse 70 auch weggelassen und der fluidische Steuergehäusekörper 50 wie im Fall der Figuren 9, 11 und 12 über dessen einheitliche Anschlußseite 12 ' direkt an die einheitliche Anschlußschnittstelle 12 des Grundkörpers 10 angeschlossen werden.

Aufgrund des erfindungsgemäßen modularen Ventilaufbaus ist es insbesondere auch möglich, das Zwischengehäuse 70 und den mit einem Dichtsitz versehenen Steuergehäusekörper ein- oder auszubauen, ohne daß hierzu der Grundkörper 10 aus einem Leitungssystem herausgenommen werden muß. Dagegen ist der Dichtsitz bei herkömmlichen Bauformen von Ventilen im Inneren des Ventilkörpers ausgebildet, so daß beispielsweise für den Einbau oder Ausbau von Sensoren oder dergleichen der Ventilkörper stets aus dem Leitungssystem herauszutrennen ist.

Der Ventilanschluß an das jeweilige Rohrsystem kann beispielsweise als Gewinde-, Klebe-, Schweiß- oder Muffenanschluß ausgeführt sein. Als Ventilantrieb können insbesondere pneumatische, elektromotorische, direkt wirkende oder auch einfache handbetätigte Antriebsteile vorgesehen sein.

Obwohl der Grundkörper vorzugsweise aus einem metallischen Werkstoff wie insbesondere Edelstahl oder Messing besteht, kann er grundsätzlich auch aus Kunststoff gefertigt sein. Obwohl der Steg des Grundkörpers vorzugsweise durch Umformen eines entsprechenden Rohrabschnitts erhalten wird, kann grundsätzlich als Steg auch eine Scheibe in ein Rohrstück eingesetzt sein, wobei in diesem Fall der Steg zweckmäßigerweise durch Schweißen mit dem Rohrgehäuse verbunden ist.

## Patentansprüche

1. Modularer Ventilaufbau mit einem Antriebsteil und einem fluidischen Ventilteil, der aus einem Grundkörper (10) mit Einlaß (10a) und Auslaß (10b) sowie einer Anschlußschnittstelle (12) besteht, an der sowohl ein vom Einlaß (10a) ausgehender Einlaßkanal (10a') als auch ein zum Auslaß (10b) führender, vom Einlaß (10a) durch einen Steg (24) getrennter Auslaßkanal (10b') endet, wobei die Anschlußschnittstelle (12) des fluidischen Ventilteils eine vorbestimmte erste Konfiguration hat, dadurch gekennzeichnet, daß der Ventilaufbau desweiteren mehrere verschiedenartige Ventilkomponenten (36, 50, 70, 76, 76') umfasst, die jeweils über eine Anschlußseite (12') mit einer vorbestimmten zweiten Konfiguration verfügen, wobei die erste und die zweite Konfiguration zusammenpassen, so daß an das fluidische Ventilteil wahlweise und austauschbar eine der Ventilkomponenten (36, 50, 70, 76, 76') anschließbar ist.

2. Ventilaufbau nach Anspruch 1, dadurch gekennzeichnet, daß die Anschlußseiten (12') der verschiedenartigen Ventilkomponenten (50, 70, 76, 76') jeweils wenigstens eine Anschlußöffnung (52, 54; 72, 74; 100, 102) mit gleicher, vorbestimmter Konfiguration aufweisen.

3. Ventilaufbau nach Anspruch 1 oder 2, dadurch gekennzeichnet, daß die verschiedenartigen Ventilkomponenten umfassen:
- direktbetätigte Ventilelemente (36), die an der Berandung (22) einer die Anschlußschnittstelle (12) bildenden Öffnung (26) sowie an dem Steg (24) abdichten;
- fluidische Steuergehäusekörper (50, 76, 76'), in denen eine Ventilkammer mit einem Dichtsitz (62, 80) gebildet ist;
- Zwischengehäuse (70) zur Aufnahme von Sensoren;
- Zwischengehäuse (70) zur Leitungsverzweigung, Probenentnahme, Einspeisung oder Dosierung.

4. Ventilaufbau nach Anspruch 3, dadurch gekennzeichnet, daß die Zwischengehäuse (70) ihrerseits auf der ihrer Anschlußseite (12') gegenüberliegenden Seite eine Anschlußschnittstelle (14) mit einer vorbestimmten Konfiguration aufweisen.

5. Ventilaufbau nach einem der Ansprüche 1 bis 3, dadurch gekennzeichnet, daß wenigstens bestimmte der Ventilkomponenten (50, 70, 76, 76') ihrerseits modular aufgebaut sind.

6. Ventilaufbau nach Anspruch 3, dadurch gekennzeichnet, daß der fluidische Steuergehäusekörper (50, 76, 76') seinerseits auf der seiner Anschlußseite (12') gegenüberliegenden Seite eine Anschlußschnittstelle (15) mit einer vorbestimmten Konfiguration zur wahlfreien Kombination mit einem Antriebsteil (60) oder einem Vorsteuerventilteil (78, 78') aufweist.

7. Ventilaufbau nach einem der vorstehenden Ansprüche, dadurch gekennzeichnet, daß der Grundkörper (10) aus einem zylindrischen Rohrabschnitt durch Ausfüllen mit einem Füllmaterial, Verschließen der Enden durch Verschußstempel, Einbringen in eine Preßform und Verformen in einem einzigen Schritt mittels eines Stempels gebildet ist, der quer zur Achse des Rohrabschnitts von außen einwirkt und im Inneren des Rohrabschnitts den zur Umformung erforderlichen Druck erzeugt, welcher durch das Füllmaterial auf die Innenwandung des Rohrabschnitts übertragen wird, wobei die Enden des Rohrabschnitts als rohrförmige Anschlußstutzen (10a, 10b) erhalten bleiben und der zwischen den Enden gelegene Mittelabschnitt (10c) auf einer Seite des Rohrabschnitts, die dem Boden des Ventilkörpers entspricht, unter Ausbildung einer konkaven Wölbung einwärts gedrückt ist, während auf der gegenüberliegenden Seite des Rohrabschnitts mittels einer Gegenfläche der Preßform eine Abflachung der Wandung des Rohrabschnitts ausgebildet ist, so daß gegenüber der Abflachung zwei Fluid-Leitflächen (16, 18) gebildet sind, die ausgehend von der durch die Anschlußstutzen (10a, 10b) definierten Axialrichtung axial einwärts und zugleich in Richtung zu der Abflachung hin orientiert sind sowie in einem gemeinsamen, der Abflachung gegenüberliegenden Steg (24) zusammenlaufen, und wobei nach Entfernung des Füllmaterials in dem der Abflachung entsprechenden Teil der verformten Wandung des Rohrabschnitts gegenüber dem Steg (24) die Anschlußschnittstelle (12) gebildet ist.

8. Ventilaufbau nach Anspruch 7, dadurch gekennzeichnet, daß der Grundkörper (10) aus einem metallischen Werkstoff besteht.

9. Ventilaufbau nach einem der vorstehenden Ansprüche, dadurch gekennzeichnet, daß der Grundkörper (10) einen Anschlußflansch (28) aufweist, in dem die Anschlußschnittstelle (12) gebildet ist.

## Claims

1. A modular valve structure comprising a drive part and a fluid conducting valve part comprised of a main body (10) with an inlet (10a) and an outlet (10b) and furthermore of a connection interface (12), at which both an inlet duct (10a') extending from the inlet (10a) and also an outlet duct (10b') leading to the outlet (10b) and separated from the inlet (10a) by a rib (24) terminate, the connection interface (12) of the fluid conducting valve part having a predetermined first configuration, characterized in that the valve structure further comprises a plurality of different valve components (36, 50, 70, 76, 76'), which each possess a connection side (12') having a predetermined second configuration, the first and second configurations fitting together so that any one of the valve components (36, 50, 70, 76, 76') may be freely selectively and interchangeably connected with the fluid conducting valve part.

2. The valve structure as claimed in claim 1, characterized in that the connection sides (12') of the different valve components (50, 70, 76, 76') each possess at least one connection opening (52, 54; 72, 74; 100, 102) having the same, predetermined configuration.

3. The valve structure as claimed in claim 1 or 2, characterized in that the different valve components comprise:
- directly operable valve elements (36), which make sealing engagement with the rim (22) of an opening (26) forming the connection interface (12) and with the rib (24) ;
- fluid conducting control housing bodies (50, 76, 76'), in which a valve chamber is formed with a sealing seat (62, 80);
- intermediate housings (70) for accommodating sensors;
- intermediate housings (70) for duct branching, the taking of samples, the inlet of materials or for metering.

4. The valve structure as claimed in claim 3, characterized in that the intermediate housings (70) for their part possess a connection interface (14) having a predetermined configuration on the side opposite to their connection side (12').

5. The valve structure as claimed in any one of the claims 1 to 3, characterized in that at least certain ones of the valve components (50, 70, 76, 76') are for their part of modular design.

6. The valve structure as claimed in claim 3, characterized in that the fluid conducting control housing body (50, 76, 76') for its part, on the side opposite to its connection side (12'), possesses a connection interface (15) having a predetermined configuration for freely selective combination with a drive part (60) or a pilot valve part (78, 78').

7. The valve structure as claimed in any one of the preceding claims, characterized in that the main body (10) is formed from a cylindrical piece of tube by filling with a filling material, closing the ends with sealing plugs, introduction into a pressing mold and deformation in a single step using a stamp, which acts athwart the axis of the piece of tube from the outside and produces the pressure necessary for shaping in the interior of the piece of tube, such pressure being transmitted by the filling material to the inner wall of the piece of tube, the ends of the piece of tube remaining in the form of tubular connection ports (10a, 10b) and the middle section (10c) between the ends being pressed inward on one side of the piece of tube, which side corresponds to the bottom of the valve body, with the formation of a concave curvature, whereas on the opposite side of the piece of tube a flat in the wall of the piece of tube is formed using an opposite face of the pressing mold so that opposite to the flat two fluid guiding faces (16, 18) are formed, which starting from the axial direction as defined by the connection ports (10a, 10b) are orientated axially inward and simultaneously toward the flat and furthermore converge together in a common rib (24) opposite to the flat, and after removal of the filling material the connection interface (12) being formed in the part, corresponding to the flat, of the deformed wall of the piece of tube opposite to the rib (24).

8. The valve structure as claimed in claim 7, characterized in that the main body (10) consists of a metallic material.

9. The valve structure as claimed in any one of the preceding claims, characterized in that the main body (10) possesses a connection flange (28), in which the connection interface (12) is formed.

## Revendications

1. Structure modulaire de valve comprenant une partie de commande et une partie de valve fluidique qui est constituée par un corps de base (10) avec une admission (10a) et une sortie (10b) ainsi qu'une interface de raccordement (12), au niveau de laquelle se termine non seulement un canal d'admission (10a') provenant de l'admission (10a), mais aussi un canal de sortie (10b') menant à la sortie (10b) et séparé de l'admission (10a) par une âme (24), l'interface de raccordement (12) de la partie de valve fluidique ayant une première configuration prédéterminée, caractérisée en ce que la structure de valve comprend par ailleurs plusieurs composants différents (36, 50, 70, 76, 76') qui disposent chacun d'une face de raccordement (12') avec une seconde configuration prédéterminée, la première et la seconde configurations étant adaptées l'une à l'autre de sorte qu'on peut raccorder à la partie de valve fluidique de manière sélective et interchangeable, un des composants de valve (36, 50, 70, 76, 76').

2. Structure de valve selon la revendication 1, caractérisée en ce que les faces de raccordement (12') des différents composants de valve (50, 70, 76, 76') présentent chacune au moins un orifice de raccordement (52, 54; 72, 74; 100, 102) avec la même configuration prédéterminée.

3. Structure de valve selon la revendication 1 ou 2, caractérisée en ce que les différents composants de valve comprennent :
- des clapets (36) à actionnement direct qui fournissent un étanchement sur la bordure (22) d'une ouverture (26) formant l'interface de raccordement (12) ainsi que sur l'âme (24) ;
- des corps de boîtiers de commande (50, 76, 76') dans lesquels est formée une chambre de valve avec un siège d'étanchéité (62, 80) ;
- des boîtiers intermédiaires (70) destinés à recevoir des capteurs ;
- des boîtiers intermédiaires (70) pour brancher des conduites, effectuer des prélèvements, une alimentation et des dosages.

4. Structure de valve selon la revendication 3, caractérisée en ce que pour leur part, les boîtiers intermédiaires (7) présentent, sur la face opposée à leur face de raccordement (12'), une interface de raccordement (14) avec une configuration prédéterminée.

5. Structure de valve selon l'une quelconque des revendications 1 à 3, caractérisée en ce qu'au moins certains des composants de valve (50, 70, 76, 76') ont, pour leur part, une structure modulaire.

6. Structure de valve selon la revendication 3, caractérisée en ce que pour sa part, le corps de boîtier de commande fluidique (50, 76, 76') présente, sur la face opposée à sa face de raccordement (12'), une interface de raccordement (15) avec une configuration prédéterminée pour être combinée sélectivement avec une partie de commande (60) ou une partie de valve pilote (78, 78').

7. Structure de valve selon l'une des revendications précédentes, caractérisé en ce que le corps de base (10) est formé depuis un tronçon de tube cylindrique par le remplissage avec un matériau de remplissage, la fermeture des extrémités au moyen de poinçons de fermeture, la mise en place dans un moule à pression et la mise en forme au cours d'une seule étape, au moyen d'un poinçon qui agit de l'extérieur transversalement à l'axe du tronçon de tube et produit à l'intérieur du tronçon la pression nécessaire à la mise en forme, laquelle est transmise par le matériau de remplissage à la paroi intérieure du tronçon de tube, les extrémités du tronçon de tube demeurant sous la forme de tubulures de raccordement (10a, 10b), et le tronçon médian (20), situé entre les extrémités, étant pressé vers l'intérieur sur un côté du tronçon de tube qui correspond au fond du corps de valve en formant un bombement concave tandis que sur le côté opposé du tronçon de tube, un aplatissement est formé dans la paroi du tronçon de tube au moyen d'une surface antagoniste du moule à pression, de sorte que vis-à-vis de l'aplatissement sont formées deux surfaces de guidage de fluide (16, 18) qui sont orientées à partir de la direction axiale définie par les tubulures de raccordement (10a, 10b), axialement vers l'intérieur et simultanément en direction de l'aplatissement et qui convergent dans un âme (24) commune vis-à-vis de l'aplatissement, et, après avoir enlevé le matériau de remplissage, l'interface de raccordement (12) étant formée dans la partie, correspondante à l'aplatissement, de la paroi mise en forme du tronçon de tube opposée à l'âme (24).

8. Structure de valve selon la revendication 7, caractérisée en ce que le corps de base (10) est en un matériau métallique.

9. Structure de valve selon l'une quelconque des revendications précédentes, caractérisée en ce que le corps de base (10) présente une bride de raccordement (28) dans laquelle est formée l'interface de raccordement (12).
